Europäisches Patentamt

European Patent Office

Office européen des brevets

(11) Publication number: **0 067 466**
**B1**

## EUROPEAN PATENT SPECIFICATION

(45) Date of publication of patent specification: **18.01.89**

(21) Application number: **82200635.9**

(22) Date of filing: **24.05.82**

(51) Int. Cl.⁴: **B 67 D 1/00,** G 01 F 11/08,
A 47 J 31/40

(54) Method and apparatus for metering beverage concentrates.

(30) Priority: **25.05.81 NL 8102567**
**12.01.82 GB 8200735**

(43) Date of publication of application:
**22.12.82 Bulletin 82/51**

(45) Publication of the grant of the patent:
**18.01.89 Bulletin 89/03**

(84) Designated Contracting States:
**AT BE CH DE FR GB IT LI LU NL SE**

(56) References cited:
**DE-B-1 159 345**
**DE-B-1 221 028**
**GB-A-1 367 057**
**GB-A-2 002 324**
**US-A-2 647 661**
**US-A-2 895 653**
**US-A-3 881 641**
**US-A-3 915 651**

(73) Proprietor: **Douwe Egberts Koninklijke**
**Tabaksfabriek- Koffiebranderijen-Theehandel**
**N.V.**
**Keulsekade 143**
**NL-3532 AA Utrecht (NL)**

(72) Inventor: **Van Overbruggen, Gerardus Johannes**
**Justinus**
**Franciscushof 89**
**NL-4133 BC Vianen (NL)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

# EP 0 067 466 B1

**Description**

The invention is concerned with a method for automatically metering out a consumption unit or a multiple thereof of a beverage concentrate, particularly one of high and variable viscosity in a beverage dispensing or vending machine, said consumption unit having a volume X or a multiple thereof, whereby the metering is accomplished from a reservoir forming a disposable unit with a metering appendix, said metering appendix co-operating with force-exerting means integral with the body of the beverage dispensing or vending machine, said force-exerting means being shaped in such a way as to tally with and receive said metering appendix by simple insertion without disassemblage of said force-exerting means or distortion of said metering appendix.

Such a method is known of applicants' British Patent Application 32418/78 (GB—A—2002324) wherein it has been proposed that the part of the metering device which comes into contact with the extract, in the form of a tube, should be fixedly connected to a container. In addition it is ensured that the tube is depressed in a highly accurately reproducible manner. The container plus metering tube can be regarded as a disposable unit, and gives excellent satisfaction, from the point of view of both hygiene and ease of operation.

In the method of operating the metering device as indicated in that application, it is not possible to vary the dose of extract—possibly for each dosage separately—in a simple manner. Moreover the method in practice depends on the pressure of the main water system, which pressure should be above a certain value. It is an object of the present invention to overcome the above drawbacks of the prior art.

The present invention provides a method for the automatic metering of a beverage concentrate in a beverage dispensing or vending machine which permits very high metering accuracy, and great flexibility with regard to the dosing.

The method is characterized by at an appropriate start signal automatically and pulsatingly engaging said metering appendix by said force-exerting means, such as to meter out the beverage concentrate in a series of consecutive pulses, each pulse corresponding with the metering out of a volume Y, and stopping at an appropriate stop signal, when the number of pulses has reached a number N, or a multiple thereof, said number N corresponding to the desired volume X of beverage concentrate, N being equal to X/Y and at least six.

The invention relates also to an apparatus for carrying out the said method for accurately metering out a consumption unit or multiple thereof of beverage concentrate, in particular one of high and variable viscosity when installed in a beverage dispensing or vending machine, said consumption unit having a volume X and being incrementally adjustable by increments of volume Y, comprising in operative co-operation:

a disposable container consisting of a reservoir with beverage concentrate, integral with a metering appendix at least partially of resilient elastic material, said appendix being provided with a first non-return valve opening to the outside, and a second non-return valve opening to the inside,

force-exerting means responsive to an appropriate start signal for automatically exerting a pulsating force on the resilient portion of the metering appendix, such as to alternatingly decrease and restore the volume between the two valves, while these continue to be in open communication with each other, said force-exerting means being integral with the body of said dispensing or vending machine and being shaped in such a way as to tally with and receive said metering appendix by simple insertion without disassemblage of said force-exerting means or distortion of said metering appendix, which apparatus is characterized by:

means for detecting and counting the number of exertions of said force-exerting means, and

means, responsive to an appropriate stop signal for stopping the dispensing when the count is equal to a desired number N, respectively a multiple thereof, while N=X/Y,

means for producing said stop signal, the arrangement being such that on each pulse an accurately metered volume Y of the beverage concentrate leaves the appendix through the first valve and subsequently an equal volume enters said appendix from the container through the second valve, the volume X being at least six times the volume Y.

The volume X of beverage concentrate will range per consumption unit between 2 and 12 cm³, depending inter alia on the kind of beverage.

The frequency with which the pulses are given is normally between 1.5 and 50 per second, and will depend on the nature of the concentrate. According as its viscosity is higher, we prefer lower frequencies.

For coffee and tea concentrates, which may have a very high and highly variable viscosity, but on the other hand must be rapidly dispensed by the machine (as there is often quite a rush on the machines for these popular drinks) we preferably employ frequencies of 5 to 50 pulses per second.

Naturally the metering appendix will preferably be made as compact as possible.

Preferably, metering will be effected with whole pulses, which means that the fraction X/Y=N is an integer. One manner in which this can be achieved will be described hereinafter.

The signal for operating the metering device may be such that all times a pre-determining number of pulses, pre-set and stored in the apparatus, is generated. This predetermined number may correspond to that required for one consumption unit, but also to that required for a multiple thereof. Detecting and counting means are provided to compare the pre-set and stored number, with the number of pulses. The detecting and counting means will normally include a pulse counter. The means for pre-setting and storing may be manually operable, but other known methods are not excluded.

The signal may, however, also consist of two parts, in the sense that the first part of the signal puts the metering device into operation, and the second part stops the metering device, so that each time a desired quantity can be metered to suit the wishes of the user. The first part of the signal may, for example, be introduced by pressing a button, while releasing the button introduces the second part of the signal. The volume of a consumption unit can then be varied at will, but there is also the possibility of an adjustment at which a whole number of consumption units for a random volume is dispensed. For this purpose the apparatus may be provided, for example, with three buttons each of which serves for one of the functions just described.

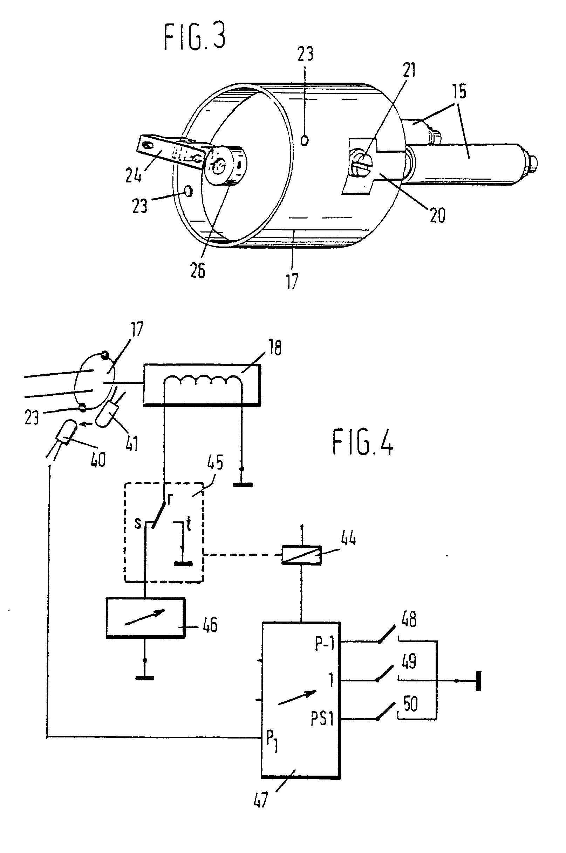

Preferably, volume Y is adjustable, which may be effected by varying the intensity of the pulses, i.e. the portion of the volume between the two valves of the metering appendix which is expelled during each pulse. The metered volume of X can be varied by varying Y as just indicated, but also by varying the number of pulses. Counting can be easily accomplished according to electronic methods and devices well known in the art. One example is more specifically shown in Fig. 4 and discussed below.

For good practicability, it is of importance that the dispensing of a normal consumption unit should not take too long. What can be tolerated depends on the nature of the product. For coffee and tea concentrates, for example, the above parameters will preferably be so selected that the dispensing takes one to two seconds per consumption unit.

The variation in volume between the two valves of the metering appendix, as referred to hereinbefore, can be effected by exerting a force (preferably pressure) transversely to the direction of the flow of extract. However, the exertion of force (preferably pressure) in the direction of the flow of extract current is also possible.

The exertion of force for generating the pulses can be effected by mechanical interaction between a force exerting system fixedly connected to the body of the beverage vending machine, and the elastic portion of the metering appendix.

However, electromagnetic interaction is also possible when a magnet (e.g. an electromagnet) is provided in the beverage vending machine and the metering appendix is provided with magnetizable or magnetized material.

Furthermore, a mechanical interaction can be introduced by an electromagnetic one, e.g. in the manner mentioned hereinafter as a "third and an eleventh" possibility.

It may be of importance, in particular when electromagnetic interaction is used for generating the pulses, to give the pulses a well-defined magnitude by means of fixed points ("stops").

It is understandable that the characteristics of the resilient elastic material on which forces are exerted by the pulses, and the characteristics of the valves must satisfy certain requirements and be attuned to each other to produce as accurate metering as possible. The elastic material should preferably have such a resiliency that at the moment when a next pulse begins, it has fully resumed its original shape.

In connection with the above, it is of importance that the number of pulses per second should not be taken too large. The lower valve must not have an unduly low sensitivity to prevent leakage—in particular during handling of the disposable container. Preferably the sensitivity should be between 40 and 500 millibars, and more specifically between 250 and 300 millibar.

The upper valve must be able to open quite easily, in most cases the resiliency of the elastic material of the metering appendix must be sufficient for the purpose. Preferably its responsiveness is between 0.1—30 millibars, more specifically between 0.5 and 4 millibar.

The disposable container may be both rigid and flexible, i.e. collapsible when emptied. In the first case, when used for self-preserving extract, the container may be provided at the top with a small aperture sealed with a tape that can be stripped off.

In a preferred embodiment of the invention, the resilient elastic material is situated between the two valves.

A practical embodiment is that in which the metering appendix has a substantially cylindrical shape, in particular a tubular shape.

Very suitable for a metering appendix is, for example, a tube of polyester elastomer (such as "Arnitel" of Akzo and "Hytrel" of Dupont) of sufficient "hardness" and "wall thickness". These materials are also very suitable, for that matter, for the elastic portion of the metering appendix if it has a different shape from that of a tube.

Conveniently an elastomer tube of $\frac{1}{2}$—3 mm wall thickness and a hardness of 20—80 shore D may be used, and preferably with a wall thickness of 1—2 mm and a hardness of 30—60 shore D.

The metering device according to the invention is of particular importance in the case of highly-concentrated extracts which may exhibit variable viscosities, for example, owing to temperature fluctuations or on standing.

This is the case, for example, with concentrated coffee extract and concentrated tea extract. To these last, gum-like substances must be added to prevent sedimentation ("creaming").

These differences in viscosity may also be the result of process variation during production, variations in raw materials and/or temperature fluctuations when the product is stored without, or with insufficient temperature control. Besides, in the case of fruit juice concentrates, variations in the content of pulp in the concentrate may cause variations in flow characteristics.

A tube-shaped metering appendix may suitably be used in co-operation with a rotary mechanism provided with means for pulsatingly impressing the hose in transverse direction.

The invention will now be described further, by way of example only, with reference to the accompanying drawings, in which:

Fig. 1 is a perspective view of a container with metering appendix according to the present invention, and showing the mechanism for applying the pulses;

Fig. 2 is a view of the pulsing mechanism in a direction perpendicular to the longitudinal axis;

Fig. 3 is a perspective view of the pulsing mechanism (without motor, reduction gearbox and frame) in somewhat greater detail than is apparent from Fig. 1;

Fig. 4 is a block diagram of the electronic circuitry for operating the pulsing mechanism;

Fig. 5 is a perspective view of an embodiment alternative to that of the Figures 1—3 for applying the pulses in a mechanical way;

Fig. 6 is a lengthwise cross section of an embodiment in which mechanical means applying pulses to the metering appendix are magnetically actuated; a metering appendix with special valve construction being also shown; and

Fig. 7 is a cross-section according to VII—VII in Fig. 6.

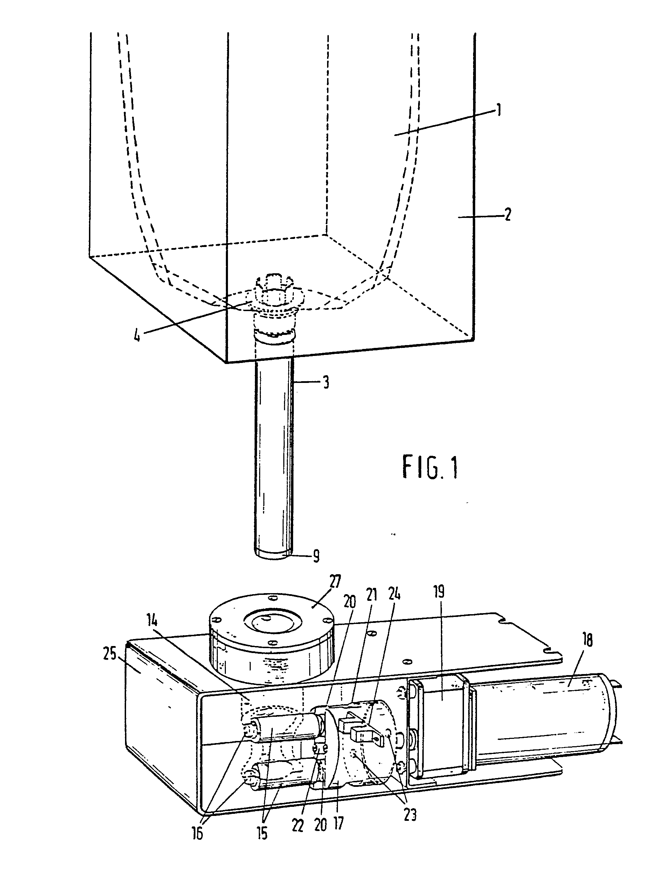

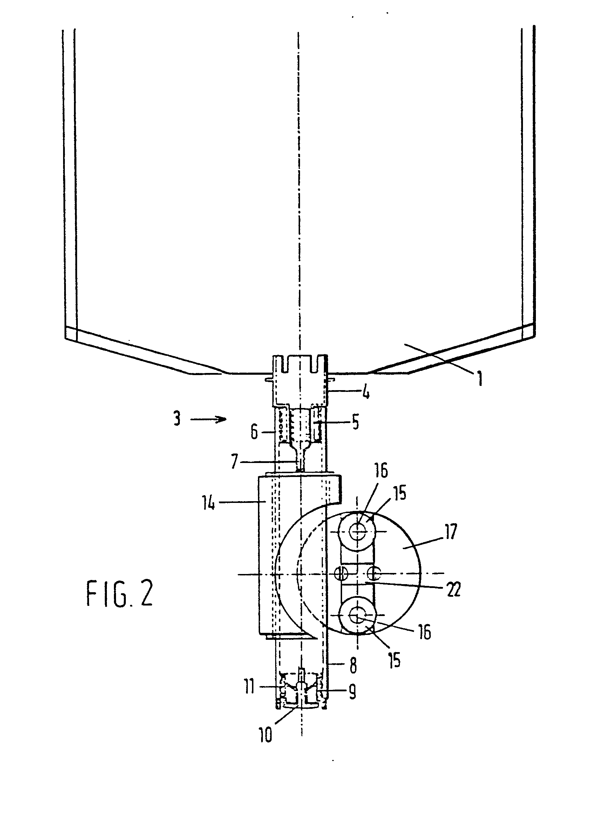

Referring to the drawings, a flexible container is shown dotted at 1 within a cardboard packing box 2 in Fig. 1. Shown at 3 is a tube-like metering appendix, which is sealed to the flexible container by means of a transparent nipple 4 of synthetic plastic material. Adaptor 4 has a narrower portion 5 (see Fig. 2) around which a body 6 of synthetic plastic material is fastened by means of a snap connection. Clamp fitted in body 6 is a rubber beak valve 7. A piece of polyester elastomer tube 8, 108 mm long and having a wall thickness of 1.35 mm (type Arnitel EM 400; shore D hardness 40) is clamp fitted around body 6 at the top. At its bottom end, this piece of hose is clamp fitted around a nipple 9 of synthetic plastic material, in which a mushroom-shaped insert 10 of silicone rubber is clamped by means of radial ribs 11. The bottom aperture of nipple 9 is closed by the "hat" of the mushroom-shaped insert 10. Parts 9 and 10 co-operate as a non-return valve, that is to say, when a pressure prevails in the metering appendix, the "hat" is deflected outwards, and concentrate issues from nipple 9.

Hose 8 has a "backing" in the form of a metal "bed" 14. The part 14 can be "lined" with a flaccid elastic tube (not shown) which separates the dosing tube from the force-exerting means. This prevents contamination of the force exerting means by beverage concentrate, if by careless handling some spillage of concentrate might occur.

Rollers 15 are mounted for free rotation on shafts 16, secured to a partially hollow body 17. This body 17 is connected by means of a flange 26 (Figure 3) to the output shaft of reduction gear box (see Figure 1), the input shaft of which is connected to a motor 18, the arrangement being such that the body 17 can be rotated. The output shaft of the gear box rotates at a speed, for example, of 180 rpm. When body 17 is rotated tube 8 is then given six pulses per second. The number of pulses per second, and hence the quantity of each dose can be varied by varying the voltage when motor 18 is of the kind whose speed depends on the voltage applied.

It is also possible to vary the spacing of the rollers, whereby the intensity of each pulse (i.e. the extent to which the hose is depressed during each pulse) and hence the volume dosed during each pulse is varied.

Shafts 16 of rollers 15 are mounted in inserts 20 and 20' in body 17. Insert 20 is provided with internal, left-hand screw-thread, insert 20' with right-hand internal screw-thread. The inserts are interconnected by means of a threaded spindle (not shown), one of the ends of which is shown at 21. This threaded spindle is provided at the region where it cooperates with insert 20 with external left-hand screw-thread, and at the region where it cooperates with insert 20' with external right-hand screw-thread. The spindle is positioned by means of a block in which it is freely rotatable. The outside of this block, secured with two screws, is shown at 22.

In order that, at all times, a whole number of pulses is administered, and to ensure that upon termination of a dispensing step the rollers 15 are free from hose 8, two holes 23 are provided in the hollow part of body 17, which cooperate with a photo-electric interruptor 24. One leg of 24 is provided with a light source, the other with a photocell (shown in Fig. 4). A suitable interruptor is TKF. SF. CNY. 37 of AEG/Telefunken. Upon the passage of one of the holes 23, the interruptor generates an electrical signal, which can be used to count the number of pulses given, and when the desired number has been reached to stop the motor. Normally the stopping of the motor requires some time, and therefore the holes will be somewhat off-set relative to the rollers, so that these can move through a certain braking distance after the stop signal. The stop signal can best be given by short-circuiting the motor (as a consequence the braking distance is always equal). By all this it can be achieved that the rollers are always in a correct stationary position.

Also secured to frame 25 is a device 27 for signalling when the container is empty. For that purpose the device comprises a photo-electric interruptor (not shown). As indicated hereinbefore, nipple 4 is transparent, so that the presence or absence of somewhat light-absorbing liquids within the nipple can be detected.

The apparatus as described can be operated, by way of example, in accordance with the block diagram illustrated in Fig. 4.

The motor is indicated at 18. Disc 17 with holes 23 therein is secured to the output shaft of the motor. A light transmitter 41 and receiver 40 are disposed in the photo-electric interruptor 24 in such a manner relative to each other that upon rotation of the shaft of motor 18 the light path between transmitter 41 and receiver 40 is open during the passage of a hole 23. As a result, upon each passage of a hole an electrical pulse is given to the pre-settable electrical counter 47. The counter is capable of increasing its position by one each time a pulse is received by receiver 40. Counter 47 can count from 0 to P. When the counter has the position P no signal is generated. When counter 47 has a position of from 0 to P−1, the counter gives a signal to relay 44, 45. If the relay is energized, switch 45 is put into the position in which via contacts r and s, the adjustable voltage of the source of voltage 46 causes the motor to run. If relay 44, 45 drops out, the voltage from 46 is turned off, and the motor is shorted via contacts t and r.

The apparatus is provided with switches 48, 49 and 50, operated for example by press-buttons. Operation of one of the switches 48, 49, 50 can cause the motor to function in three different manners.

When switch 50 is operated, a counter-comparator (included in 47, but not separately shown) is set in a position P. The relay receives an output signal, and the motor starts to run. The pulses from photoreceiver 40 increase the position of the counter by one at the time. When the position P is reached, the output signal drops out, and the motor stops through short-circuiting in the manner described. The input PSI of counter 47 has been made so that operation of switch 50 results in only one pre-set of the counter. Holding the button for switch 50 for a longer period of time does not affect the position of the counter any further.

When the button for switch 49 is pressed, the counter is pre-set in a position P. The counter receives an output signal and the motor starts running. The pulses from 40 increase the position of the counter by one at the time. When the counter has reached the position P−1 and switch 49 is still on, the next pulse will pre-set the counter to P.

When switch 49 is off the counter can reach the position P, and the motor stops. When switch 48 is operated the counter is pre-set in the position P−1. The counter receives an output signal and the motor starts to run. So long as switch 48 is on, counter 47 remains pre-set in position P−1. When switch 48 is off, the pulses can increase the position of the counter. The first pulse arising after the button for switch 49 has been released will put the counter into position P, and the motor stops.

The adjustable pre-set of counter 47 can be realized in various known manners by using different counters having a fixed pre-set, or a counter having several pre-set inputs which can be operated by means of a switch.

In addition to the system described in detail above, there are a large number of other possibilities for dispensing concentrate in accordance with the present invention. A number of examples will be briefly described hereinafter.

As a second possibility, the metering appendix—made of tubular elastic material—with the two valves is placed in the vending machine between two plates, at least one of which is movable at right angles to the longitudinal direction of the hose. The plate(s) can be moved in a pulsating manner, whereby a portion of the hose is emptied. The plates can be driven, for example, by means of a motor with an eccentric. The intensity of the pulse can be varied either by varying the size of the plates, or the depth through which the tube is impressed.

A third possibility is the following: a tube-like metering appendix as described is placed in a pipe. The pipe has a hole of approximately 6 mm in diameter, through which a pin can be moved at right angles to the tube in a pulsating manner, thereby dispensing concentrate. The pin may be placed, for example, in the core of an electromagnet, which when energized, causes the pin to move towards the tube, impressing it.

According to a fourth possibility, a circular symmetric double-walled body is placed around a tube-like metering appendix, the outside of which body is rigid, and the inside being made of elastic material. The space between the two walls is filled with a magnetizable powder which, when not in a magnetic field, beahves as a fluid. A coil secured around the body will magnetize the power when energized, thereby effecting a constriction of the metering tube. The metered volume can be varied by varying the frequency of energizing the coil.

According to a fifth possibility, the tubular appendix is surrounded by a body which can be opened and closed in the way of an iris diaphragm, driven by a motor. Adjustment is possible by varying the degree of closing or the frequency.

According to a sixth possibility, the tubular metering portion is provided at the bottom with some projections which fall into recesses in the vending machine. These recesses are secured to a body which, driven by a motor, can be rotated clockwise and counter-clockwise. As a result the hose is twisted in pulsating manner, whereby extract is dispensed.

According to a seventh possibility, the metering appendix is not a tube, but a plastic (rigid) chamber with an elastic membrane on one side. Naturally this chamber is closed at the top and bottom by means of a valve. Secured to the membrane is a flange which, when the metering appendix is placed in the vending machine, falls into a holder, which can be moved in a pulsating manner in a direction perpendicular to the above membrane.

According to an eighth possibility, a piece of soft iron is fixedly secured to the elastic membrane as just described, which, when installed in the vending machine, co-operates there with an electromagnet.

Energizing and de-energizing the electromagnetic produces a pulsating reduction in volume in the chamber between the two valves and hence concentrate is dispensed in a pulsating manner. The piece of soft iron can be replaced by a permanent magnet, which makes it possible, using an alternating magnetic field, which may be produced by applying AC voltage to the electromagnet, to both increase and decrease the volume in the chamber without substantially depending on the resiliency of the material of the membrane.

In a ninth possibility, the space between the two valves is a cylindrical chamber with rigid top and bottom. The wall of the cylinder is either a gas-filled circular ring, or such a ring of foamed synthetic plastics material with closed cells. Fixedly connected to this space is a soft iron ring which when placed in the vending machine cooperates with an electromagnet which produces an alternating magnetic field. This compresses the ring, whereby the volume between the two valves is decreased in a pulsating manner.

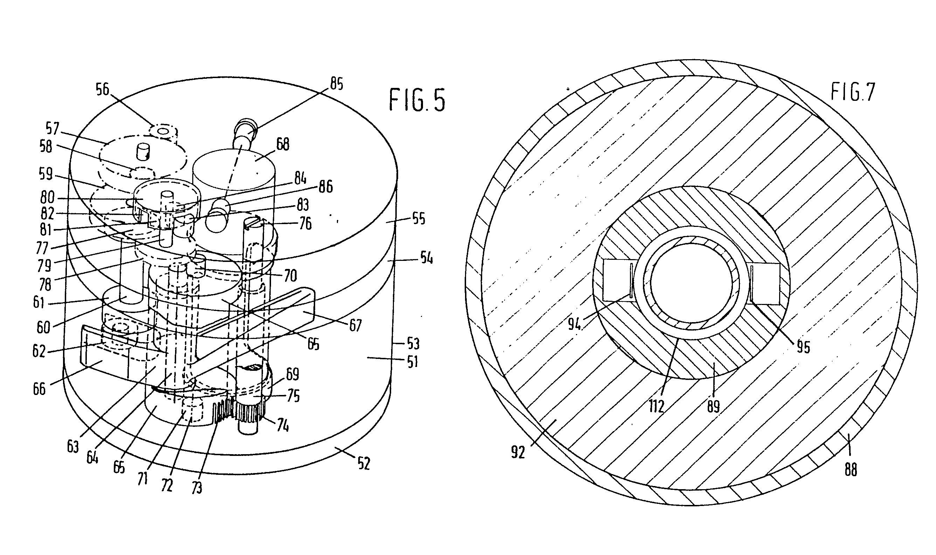

A tenth embodiment according to the invention is represented in Fig. 5 and discussed in detail below. In this embodiment pulses are given by alternating pressure transversely to the axis of a metering appendix in the shape of a tube.

The mechanism for administering the pulses is situated in a housing (which we will call "mantle") from which the external contours are given in thin lines 51. The mantle comprises a bottom section 52, a cylindrical enclosure ("wall") 53, and two "top" sections 54 and 55. In the sections 52, 54 and 55, the bearings of the several mechanisms, which will be presently described, are situated.

The top sections 54 and 55, as well as the bottom section 52 are provided with holes (68 in section 55) for inserting the metering appendix. The holes are partly represented by dotted lines. Provision is also made for a "backing" with "lining", 69, the same as shown in Fig. 2 by 14 and discussed in describing this Figure 2. For the sake of clarity, this device is not shown in Fig. 5 at issue.

A small motor situated within the mantle serves for actuating the pulse administering mechanism. The motor (e.g. the firm Bevauge, type M28xV20) in itself is not shown in Fig. 5, again for reasons of clarity. The top of the axle of the motor is provided with a toothed wheel 56, cooperating with the toothed wheel 57.

On the axle of 57 is provided a toothed wheel 58 (shown in dotted lines), which in its turn cooperates with the toothed wheel 59. The axle 60 of 59 is provided with pinion 61, holding the excenter 62.

A two pronged lever 63 is rotatable around the axle 64, with bearings in the housing 65, which is attached to the bottom section 52 and the top section 54 of the mantle 51.

By actuating the motor, the excenter 62 will make a to and fro movement in a horizontal plane.

The excenter 62 cooperates with the one arm 66 of the lever 63. By the to and fro movement of this arm 66 the other arm 67 will also make a to and fro movement in the horizontal plane, thereby providing the pulses to the metering appendix.

The housing 65 is partly cut open to show the two pronged lever 63. The top and the bottom of the housing 65 are provided respectively with the pinions 70 and 71. This housing can be rotated around the axis 72. For the purpose of this rotation the bottom of the housing 65 is partly provided with toothing 73, cooperating with the toothed wheel 74, attached to the axle 75. This axle 75 has its bearings in the bottom section 52 and the top sections 54 and 55.

The axle 75 is provided with a slot 76, enabling it to being turned by external interaction. By turning this axle 75 the housing 65 will also be turned around the axis 72. At its inside in the top the housing 65 is provided with a screw (not shown) through the top section 54 of the mantle 51. The position of the housing can be fixed by this screw. Before turning the axle 75 this screw has to be unlocked. After turning 75, the screw is locked again.

As the axle 64 is eccentric to the axis 72 around which the housing 65 is turned by turning the axle 75 (the toothed wheel 74 cooperating with the toothing 73), it is possible to adjust the depth at which the dosing appendices is intended by each pulse administered by the arm 67 of the lever 63. As mentioned in discussing the embodiment of the invention represented by Fig. 1, the number of pulses have to be counted and preferably the motor has to be stopped in a position whereby the arm 67 of the lever 63 is free from the metering appendix. This is reached by an arrangement as follows.

On the axle 60 there is attached a toothed wheel 77 (shown in part just below the toothed wheel 59), which cooperates with the toothed wheel 78. This wheel 78 is provided with an axle 79, bearing a plate 80 with a rim 81. This rim 81 is provided with a sleeve 82. The sleeve cooperates with an opto-coupler 83—84. The manner of functioning is as described in discussing the figures 3 and 4. With the opto-coupler 85—86 as situated in the top plate 55 at opposite sides of the hole 68 for the metering appendix, a signal can be created when the container with beverage concentrate is empty.

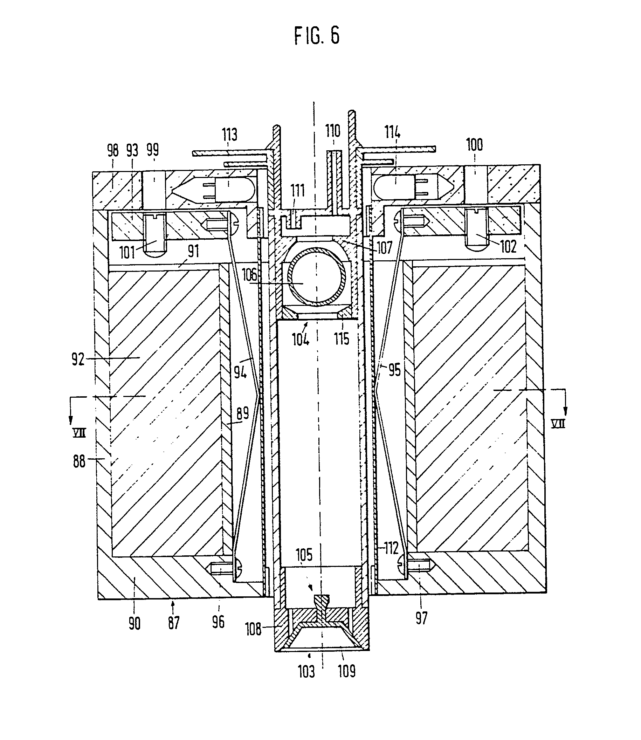

An eleventh embodiment according to the invention is represented in Figures 6 and 7 and discussed in detail below. This embodiment comprises an electromagnet actuating a metal spring, which in its turn exerts a force on the metering appendix for creating the pulses. Also in Fig. 6 an alternative for the metering appendix of Fig. 2 is shown in detail. Fig. 6 is a longitudinal cross-section and Fig. 7 is a cross-section along VII—VII in Fig. 6.

An iron housing is shown at 87, with an outer wall 88, and inner wall 89 and a bottom plate 90. A coil is shown at 92, with a brass cover 91. A circular iron core plate 93 is attached to two springs 94 and 95. The opposite ends of the springs are attached (at 96 and 97 respectively) to the bottom plate 90 of the housing. The outer wall 88 of the housing is sealed to a plastic top plate 98. This top plate has two holes 99 and 100, corresponding with holes in the core plate 93. Each hole in the core plate is threaded, such as to cooperate

6

with adjusting screws 101 and 102. With these screws the "strike" of the core plate 93 can be adjusted, such as to adjust the depth to which the springs 94 and 95 are pressed in the metering appendix each time the coil 92 is energized.

The metering appendix 103 is provided with an upper valve 104 and a lower valve 105. The upper valve consists of a thin-walled hollow plastic sphere 106 filled with air, cooperating with the valve seal 107. When the appendix 103 is filled with air the hollow sphere 106 may be supported by the support 115. The lower valve 105 comprises a valve body 108, cooperating with an umbrella shaped silicon insert 109. The valve body 108 is provided with a central hole to fix the silicon insert and four holes for the beverage extract to be fed out.

The metering appendix 103 according to this embodiment of the invention has special advantages when a flexible container is used for the beverage concentrate. In that case it will be advantageously folded against the body of the container and transported (for coffee extract in frozen condition) while the appendix still contains air (or inert gas). In unpacking, the appendix is brought in the right vertical position. Air will escape to the container through the plastic tube 110, while concentrate will enter the metering appendix through the plastic tube 111. The hollow sphere 106 having a much lower specific gravity than the beverage, it will be pressed against the valve seat 107. The sensitivity of this kind of upper valve is around 1 millibar with a cross section dimension of the metering appendix of around 20 mm.

Between the springs 94 and 95 and the metering appendix a hose of thin (0.5 mm) elastic material (e.g. polyurethane-plastic) 112 is positioned such as to avoid any contamination of the magnetic-mechanical section of the force exerting device by beverage concentrate which by accident might be spilled. At 113 and 114 an optocoupler is shown to signal when the container is empty.

Preferred parameters for the various kinds of beverage concentrates are listed in the following table.

|  | x | N | Pulses per second |
|---|---|---|---|
| Tea | 2—4 | 6—100 | 2—50 |
| Coffee | 4—12 | 6—100 | 2—50 |
| Chocolate | 20—40 | 15—100 | 1.5—10 |
| Fruit juices | 20—40 | 15—100 | 1.5—10 |
| Syrups | 20—40 | 15—200 | 3—20 |
| Beer | 20—40 | 10—200 | 2—50 |

In the dispensing apparatus the disposable container mentioned above is used, whereby the first outwardly opening non-return valve has a sensitivity between 40 and 500 millibar, preferably between 250 and 300 millibar, and the second inwardly opening non-return valve of the dispensing appendix a sensitivity between 0.1 and 30 millibar, preferably between 2 and 4 millibar.

More specifically the apparatus comprises a disposable container for storing and transporting beverage concentrate and for dispensing increments of the concentrate when installed in the beverage dispensing unit, said container comprising a reservoir for beverage concentrate, a dispensing appendix having one end permanently connected to said reservoir and being in communication with said reservoir via a non-return valve with a sensitivity of 0.1—30 millibar, opening into said dispensing appendix, said dispensing appendix having an opposite free dispensing end, formed by an outwardly opening, non-return valve, with a sensitivity of 40—500 millibar, which has a normally closed dispensing outlet, and said dispensing appendix being at least partly resiliently flexible and thereby adapted to be squeezed by a pulsating squeezing device in a dispensing machine whereupon a required number of increments of beverage concentrate will be dispensed from said container through said dispensing outlet.

Preferably, the sensitivity of the first non-return valve of the disposable container opening into said dispensing appendix is 0.5—4 millibar, and the sensitivity of the second outward opening non-return valve is 250—300 millibar.

## Claims

1. Method for automatically metering out a consumption unit or a multiple thereof of a beverage concentrate, particularly one of high and variable viscosity in a beverage dispensing or vending machine, said consumption unit having a volume X or a multiple thereof, whereby the metering is accomplished from a reservoir (1) forming a disposable unit (1—3) with a metering appendix (3), said metering appendix co-operating with force-exerting means (14—19; 56—67; 94, 95) integral with the body of the beverage dispensing or vending machine, said force-exerting means being shaped in such a way as to tally with and receive said metering appendix by simple insertion without disassemblage of said force-exerting means or

EP 0 067 466 B1

distortion of said metering appendix, characterized by at an appropriate start signal automatically and pulsatingly engaging said metering appendix by said force-exerting means, such as to meter out the beverage concentrate in a series of consecutive pulses, each pulse corresponding with the metering out of a volume Y, and stopping at an appropriate stop signal, when the number of pulses has reached a number N, or a multiple thereof, said number N corresponding to the desired volume X of beverage concentrate, N being equal to X/Y and at least six.

2. Apparatus for applying the method of claim 1 for accurately metering out a consumption unit or multiple thereof of beverage concentrate, in particular one of high and variable viscosity when installed in a beverage dispensing or vending machine, said consumption unit having a volume X and being incrementally adjustable by increments of volume Y, comprising in operative co-operation:

a disposable container (1—3) consisting of a reservoir (1) with beverage concentrate, integral with a metering appendix (3) at least partially of resilient elastic material, said appendix being provided with a first non-return valve (9; 10; 105) opening to the outside, and a second non-return valve (7; 104, 106) opening to the inside,

force-exerting means (14—19; 56—67; 94, 95) responsive to an appropriate start signal for automatically exerting a pulsating force on the resilient portion of the metering appendix (3), such as to alternatingly decrease and restore the volume between the two valves (7, 9, 10; 104, 105; 106, 109), while these continue to be in open communication with each other, said force-exerting means being integral with the body (14; 51; 87) of said dispensing or vending machine and being shaped in such a way as to tally with and receive said metering appendix by simple insertion without disassemblage of said force-exerting means or distortion of said metering appendix, characterized by:

means (17; 23; 24; 40, 41, 47; 80—84) for detecting and counting the number of exertions of said force-exerting means, and

means (44, 45), responsive to an appropriate stop signal for stopping the dispensing when the count is equal to a desired number N, respectively a multiple thereof, while N=X/Y,

means (47) for producing said stop signal, the arrangement being such that on each pulse an accurately metered volume Y of the beverage concentrate leaves the appendix through the first valve and subsequently an equal volume enters said appendix from the container through the second valve, the volume X being at least six times the volume Y.

3. Apparatus as claimed in claim 2 for dispensing coffee and tea concentrate, adapted to dispense 2—12 cm$^3$ concentrate per consumption unit.

4. Apparatus as claimed in claim 3 for dispensing coffee and tea concentrate, adapted to produce 5 to 50 pulses per second.

5. Apparatus as claimed in any one of the claims 2 to 4, provided with means by virtue of which the number of pulses produced is always an integer.

6. Apparatus as claimed in any one of the claims 2 to 5, characterized by means (48—50) for forming three alternative sets of signals, being one (50) in which concentrate is dispensed for one consumption unit, one (49) in which concentrate is dispensed for a whole number of consumption units, and one (48) in which the volume of concentrate metered out can be varied at will.

7. Apparatus as claimed in claim 4, for dispensing coffee concentrate and tea concentrate, adapted to dispense the concentrate in a period of time of 1—2 seconds.

8. Apparatus as claimed in any one of the claims 2 to 7, including means (15, 16, 17, 20, 20', 21; 64, 72—76; 101, 102) for alternatingly changing the volume of the dosing appendix (3) at each pulse by exerting a force perpendicular to the extract stream.

9. Apparatus as claimed in any one of the claims 2 to 8, including means for effecting the alternating change in volume at each pulse by exerting a force in the direction of the extract stream.

10. Apparatus as claimed in any one of claims 2 to 9, including means (87—95) for an electromagnetic interaction between an electromagnetic force (92) exerting system, integral with the body (87) of the dispensing or vending machine, and a magnetizable or magnetic system (93) integral with the elastic portion (94, 95) of the metering appendix.

11. Apparatus as claimed in any of the claims 2 to 10, characterized in that the responsiveness of the valve (9, 10; 105, 109) of the metering appendix opening to the outside ranges between 400 and 550 millibar, preferably between 250 and 300 millibar and the responsiveness of the valve (7; 104, 106) opening to the inside ranges between 0.1 and 4.0 millibar, preferably between 2 and 4 millibar.

12. Apparatus as claimed in any one of the claims 2 to 11, characterized in that the metering appendix (3) is shaped as a tube.

13. Apparatus as claimed in any one of the claims 2 to 12, in which use is made of a disposable container (1—3) for storing and transporting beverage concentrate and for dispensing increments of the concentrate when installed in said dispensing, said container (1—3) comprising a reservoir (1) for beverage concentrate, a metering appendix (3) being at least partly resilient flexible and thereby adapted to be squeezed by a pulsating squeezing device (14—19; 56—67; 94, 95) in a dispensing machine whereupon a required number of increments of beverage concentrate will be metered out of said container (2) through said metering outlet, said metering appendix furthermore having one end (4) permanently connected to said reservoir characterized by said metering appendix (3) being in communication with said reservoir (1) via a non-return valve (7; 104, 106) with a sensitivity of 0.1—30 millibar, opening into said metering appendix, said dispensing appendix having an opposite free dispensing end, formed by an outwardly opening, non-return valve (9, 10; 105, 109) with a sensitivity of 40—500 millibar, which has a normally closed dispensing outlet.

14. Apparatus according to claim 13, wherein the sensitivity of the non-return valve (7, 104, 106) opening into said metering appendix is 0.5—4 millibar, and the sensitivity of the outwardly opening non-return valve (9, 10; 105, 109) is 250—300 millibar.

15. Apparatus according to any one of the claims 13 to 14 whereby the metering appendix (3) has the shape of a tube.

16. Apparatus as claimed in any one of the claims 2—15, in which use is made of a container (1) with a metering appendix (3), comprising an elastomer tube (8) suitable for use in the process according to claim 2 and as a part of the apparatus according to claim 7 characterized by said tube, having a wall thickness of ½—3 mm and a shore D hardness of 20—80.

17. Apparatus according to claim 16, whereby the wall thickness is 1—2 mm and the shore D hardness is 30—60.

18. Apparatus according to claim 16 or 17, characterized in that the non-return valve (7, 104, 106) opening into said appendix (3) has a sensitivity of 0.1—30 millibar and the outwardly opening non-return valve (9, 10; 105, 109) has a sensitivity of 40—500 millibar.

19. Apparatus according to claim 18, whereby the non-return valve (7; 104, 106) opening into said metering appendix (3) has a sensitivity of 0.5—4 millibar and the outwardly opening non-return valve (9, 10; 105, 109) has a sensitivity of 250—300 millibar.

20. Apparatus as in any one of the claims 2—12, characterized in that said means (47) for producing said stop signal include means (48—50) for manually presetting and storing said number N or multiple thereof and means for comparing said manual preset number and the number of exertions to produce said appropriate stop signal.

21. Apparatus as claimed in claim 20, wherein said detecting and counting means includes a pulse counter (47).

22. Apparatus as claimed in claim 20, wherein said force exerting means includes a rotary member (17; 80) and said detecting and counting means (23, 24, 47; 81, 82, 83) for detecting the rotations of said member to produce a train of pulses includes means (47) for counting said pulses.

23. Apparatus as claimed in claim 22, wherein said means for setting includes switch means (48) for setting any of a plurality of numbers.

24. Apparatus as claimed in claim 2, including means (47) for producing said appropriate start and stop signals.

## Patentansprüche

1. Verfahren zur automatischen Dosierung einer Verbrauchseinheit oder mehrerer von diesen eines Getränkekonzentrats, speziell eines hoher und variabler Viskosität, in einem Getränkeabgabe- oder -verkaufgerät, wobei die Verbrauchseinheit ein Volumen X oder ein Mehrfaches von diesem aufweist, wobei die Dosierung von einem Speicher (1) erfolgt, welcher eine Einwegeinheit (1—3) mit einem Dosieransatz (3) ausbildet, wobei der Dosieransatz mit einer kraftaufbringenden Einrichtung (14—19; 56—67; 94, 95) zusammenwirkt, welche einstückig mit dem Körper des Getränkeabgabe- oder -verkaufsgerätes ausgebildet ist, wobei die kraftaufbringende Einrichtung so ausgebildet ist, daß sie mit dem Dosieransatz übereinstimmt und diesen durch einfache Einführung ohne Demontage der kraftaufbringenden Einrichtung oder Deformation des Dosieransatzes aufnimmt, gekennzeichnet durch ein geeignetes Startsignal zum automatischen und pulsierenden Eingriff des Dosieransatzes durch die kraftaufbringende Einrichtung, um das Getränkekonzentrat in eine Serie aufeinanderfolgender Impulse zu dosieren, wobei jeder Impuls zur Dosierung eines Volumens Y korrespondiert und um bei einem geeigneten Stoppsignal anzuhalten, wenn die Zahl der Impulse eine Zahl N oder ein Vielfaches von dieser erreicht hat, wobei die Zahl N zu dem gewünschten Volumne X des Getränkekonzetrants korrespondiert, wobei N gleich ist zu X/Y und zumindest sechs beträgt.

2. Vorrichtung zur Durchführung des Verfahrens nach Anspruch 1 zur genauen Dosierung einer Verbrauchseinheit oder einer Vielzahl von diesen von Getränkekonzentrat, im speziellen von Konzentrat hoher und variable Viskosität, wenn dieses in einem Getränkeabgabe- oder -verkaufsgerät eingesetzt ist, wobei die Verbrauchseinheit ein Volumne X aufweist und stufenweise durch Teile eines Volumens Y einstellbar ist, mit folgender Inbetriebs-Zusammenwirkung:

einem Einwegbehälter (1—3), welcher aus einem Speicher (1) mit Flüssigkeitskonzentrat besteht, welcher einstückig mit einem Dosieransatz (3) ausgebildet ist, welcher zumindest zum Teil aus federndem elastischem Material besteht, wobei der Ansatz mit einem ersten Rückschlagventil (9; 10; 105), welches sich zur Außenseite hin öffnet, und einem zweiten Rückschlagventil (7; 104; 106), welches sich zur Innenseite hin öffnet, versehen ist,

einer kraftaufbringenden Einrichtung (14—19; 56—67; 94, 95), welche auf ein geeignetes Startsignal zur automatischen Aufbringung einer pulsierenden Kraft auf den federnden Bereich des Dosieransatzes (3) ansprechbar ist, um abwechselnd das Volumen zwischen den beiden Ventilen (7, 9, 10; 104, 105; 106, 109) zu verringern und wieder aufzubauen, während diese in offener Verbindung miteinander verbleiben, wobei die Kraftaufbringung der Einrichtung einstückig mit dem Körper (14; 51; 87) des Abgabe- oder Verkaufsgerätes ausgebildet ist und derart ausgestaltet ist, daß sie mit dem Dosieransatz übereinstimmt und diesen durch einfache Einführung ohne Demontage der kraftaufbringenden Einrichtung oder Verformung des Dosieransatzes aufnimmt, gekennzeichnet durch;

eine Einrichtung (17; 23; 24; 40, 41, 47; 80—84) zur Ermittlung und zum Zählen der Zahl der Anwendungen der kraftaufbringenden Einrichtung, und

eine Einrichtung (44, 45), welche in Abhängigkeit von einem geeigneten Stoppsignal zum Stoppen der Abgabe, wenn der Zähler gleich zu einer gewünschten Zahl N bzw. einer Vielzahl von dieser ist, ansprechbar ist, während N=X/Y ist,

eine Einrichtung (47) zur Erzeugung des Stoppsignals, wobei die Anordnung so ist, daß bei jedem Impuls ein exakt dosiertes Volumen Y des Getränkekonzentrats den Ansatz durch das erste Ventil verläßt und nachfolgend ein gleiches Volumen in den Ansatz von dem Behälter durch das zweite Ventil gelangt, wobei das Volumen X zumindeste sechsmal das Volumen Y ist.

3. Vorrichtung nach Anspruch 2 zur Abgabe von Kaffee- und Tee-Konzentrat, welches zur Abgabe von 2—12 cm Konzentrat pro Verbrauchseinheit geeignet ist.

4. Vorrichtung nach Anspruch 3 zur Abgabe von Tee- und Kaffee-Konzentrat, welche zur Erzeugung von 5 bis 50 Impulsen pro s geeignet ist.

5. Vorrichtung nach einem der Ansprüche 2 bis 4, welche mit einer Einrichtung versehen ist, mittels derer die Zahl der erzeugten Impulse immer eine ganze Zahl ist.

6. Vorrichtung nach einem der Ansprüche 2 bis 5, gekennzeichnet durch eine Einrichtung (48—50) zur Ausbildung dreier alternativer Sätze von Signalen, wobei bei einem (50) Konzentrat für eine Verbrauchseinheit abgegeben wird, bei einem (49) Konzentrat über eine ganze Anzahl von Verbrauchseinheiten abgegeben wird und bei einem (48) das Volumen des dosierten Konzentrates nach Belieben variiert werden kann.

7. Vorrichtung nach Anspruch 4 zur Abgabe von Kaffeekonzentrat und Teekonzentrat, welche zur Abgabe von Konzentrat in einer Zeitperiode von 1 bis 2 s geeignet ist.

8. Vorrichtung nach einem der Ansprüche 2 bis 7 mit Einrichtungen (15, 16, 17, 20, 20′, 21; 64, 72—76; 101, 102) zur abwechselnden Veränderung des Volumens des Dosieransatzes (3) bei jedem Impuls durch Aufbringung einer Kraft senkrecht zu der Extraktströmung.

9. Vorrichtung nach einem der Ansprüche 2 bis 8 mit einer Einrichtung zur Bewirkung der alternierenden Veränderung in dem Volumen bei jedem Impuls durch Aufbringung einer Kraft in der Richtung der Extraktströmung.

10. Vorrichtung nach einem der Ansprüche 2 bis 9 mit einer Einrichtung (87—95) für eine elektromagnetische Wechselwirkung zwischen einem eine elektromagnetische Kraft (92) aufbringenden System, welches einstückig mit dem Körper (87) des Abgabe- oder Verkaufsgerätes ausgebildet ist, und einem magnetisierbaren und magnetischen System (93), welches einstückig mit dem elastischen Bereich (94, 95) des Dosieransatzes ausgebildet ist.

11. Vorrichtung nach einem der Ansprüche 2 bis 10, dadurch gekennzeichnet, daß die Ansprechbarkeit des Ventils (9, 10; 105, 109) der Öffnung des Dosieransatzes zu der Außenseite in einem Bereich zwischen 400 bis 550 mbar, bevorzugterweise zwischen 250 und 300 mbar, liegt und die Ansprechbarkeit des Ventils (7; 104, 106), welches sich zur Innenseite öffnet, in einem Bereich zwischen 0,1 und 4,0 mbar, bevorzugterweise zwischen 2 und 4 mbar, liegt.

12. Vorrichtung nach einem der Ansprüche 2 bis 11, dadurch gekennzeichnet, daß der Dosieransatz (3) röhrenförmig ausgebildet ist.

13. Vorrichtung nach einem der Ansprüche 2 bis 12, welcher ein Einwegbehälter (1—3) zur Speicherung und zum Transport von Getränkekonzentrat und zur Abgabe von Teilen des Konzentrates bei Einbau in den Spender verwendet wird, wobei der Behälter (1—3) einen Speicher (1) für Getränkekonzentrat und einen Dosieransatz (3) umfaßt, welcher zumindest zum Teil federnd flexibel ist und dadurch geeignet ist, durch eine pulsierende Quetscheinrichtung (14—19; 56—67; 94, 95) in einem Abgabegerät gequetscht zu werden, worauf eine erforderliche Zahl von Teilen des Getränkekonzentrats aus dem Behälter (2) durch den Dosierauslaß ausodisert wird, wobei der Dosieransatz weiterhin ein Ende (4) aufweist, welches ständig mit dem Speicher verbunden ist, dadurch gekennzeichnet, daß der Dosieransatz (3) in Verbindung mit dem Speicher (1) über ein Rückschlagventil (7; 104, 106) mit einer Empfindlichkeit von 0,1 bis 300 mbar steht, welches in den Dosieransatz öffnet, wobei der Dosieransatz ein gegenüberliegendes, freies Abgabeende aufweist, welches durch ein nach außen öffnendes Rückschlagventil (9, 10; 105, 109) mit einer Empfindlichkeit von 40 bis 500 mbar gebildet wird, welches einen normalerweise geschlossenen Abgabeauslaß aufweist.

14. Vorrichtung nach Anspruch 14, wobei die Empfindlichkeit des Rückschlagventils (7, 104, 106), welches sich in den Dosieransatz öffnet, 0,5 bis 4 mbar beträgt und wobei die Empfindlichkeit des sich nach außen öffnenden Rückschlagventils (9, 10; 105, 109) 250 bis 300 mbar beträgt.

15. Vorrichtung nach einem der Ansprüche 13 bis 14, wobei der Dosieransatz (3) in Form einer Röhre ausgebildet ist.

16. Vorrichtung nach einem der Ansprüche 2 bis 15, bei welcher ein Behälter (1) mit einem Dosieransatz (3) verwendet wird, welcher eine elastomere Röhre (8) umfaßt, welche zur Verwendung in dem Verfahren nach Anspruch 2 geeignet ist, sowie als Teil der Vorrichtung nach Anspruch 7, dadurch gekennzeichnet, daß die Röhre eine Wanddicke von 0,5 bis 3 mm und eine Härte von 20 bis 80 Shore D aufweist.

17. Vorrichtung nach Anspruch 16, wobei die Wanddicke 1 bis 2 mm und die Härte 30 bis 60 Shore D beträgt.

18. Vorrichtung nach Anspruch 16 oder 17, dadurch gekennzeichnet, daß das Rückschlagventil (7, 104, 106), welches sich in den Ansatz (3) öffnet, eine Empfindlichkeit von 0,1 bis 30 mbar und das sich nach außen öffnende Rückschlagventil (9, 10; 105, 109) eine Empfindlichkeit von 40 bis 500 mbar umfaßt.

19. Vorrichtung nach Anspruch 18, wobei das Rückschlagventil (7; 104, 106), welches sich in dem Dosieransatz öffnet, eine Empfindlichkeit von 0,5 bis 4 mbar und das nach außen öffnende Rückschlagventil (9, 10; 105, 109) eine Empfindlichkeit von 250 bis 300 mbar aufweist.

20. Vorrichtung nach einem der Ansprüche 2 bis 12, dadurch gekennzeichnet, daß die Einrichtung (47) zur Erzeugung des Stoppsignals eine Einrichtung (48—50) zur manuellen Voreinstellung und Speicherung der Zahl N oder einer Vielfachen von dieser umfaßt, sowie eine Einrichtung zum Vergleich der manuell eingestellten Zahl und der Zahl der Anwendungen zur Erzeugung des geeigneten Stoppsignals.

21. Vorrichtung nach Anspruch 20, wobei die Ermittlungs- und Zähleinrichtung einem Impulszähler (47) umfaßt.

22. Vorrichtung nach Anspruch 20, wobei die kraftaufbringende Einrichtung ein drehbares Bauteil (17; 80) umfaßt, und sowie die Ermittlungs- und Zähleinrichtung (23, 24, 47; 81, 82, 83) zur Ermittlung der Drehungen des Bauteils zur Erzeugung einer Impulsfolge eine Einrichtung (47) zur Zählung der Impulse umfaßt.

23. Vorrichtung nach Anspruch 22, wobei die Einrichtung zur Einstellung eine Schaltereinrichtung (48) zur Einstellung einer von mehreren Zahlen umfaßt.

24. Vorrichtung nach Anspruch 2 mit einer Einrichtung (47) zur Erzeugung geeigneter Start- und Stoppsignale.

**Revendications**

1. Procédé pour doser automatiquement une unité de consommation, ou un multiple de celle-ci, d'un concentrat de boisson, en particulier un concentrat d'une viscosité élevée et variable dans une machine de distribution ou de vente de boisson, ladite unité de consommation ayant un volume X ou un multiple de celui-ci, le dosage étant effectué à partir d'un réservoir (1) formant une unité jetable (1—3) avec un appendice de dosage (3), ledit appendice de dosage coopérant avec un dispositif d'application de force (14—19; 56—67; 94, 95) intégré au corps de la machine de distribution ou de vente de boisson, ledit dispositif d'application de force étant profilé de manière à s'adapter avec et recevoir ledit appendice de dosage par une simple insertion sans démontage dudit dispositif d'application de force ou sans déformation dudit appendice de dosage, caractérisé en ce que, lors d'un signal de démarrage approprié, ledit appendice de dosage est sollicité automatiquement et de façon pulsée par ledit dispositif d'application de force, de façon à doser le concentrat de boisson dans une série d'impulsions consécutives, chaque impulsion correspondant au dosage d'un volume Y, et en arrêtant l'opération à un signal d'arrêt approprié, quand le nombre d'impulsions a atteint un nombre N, ou un multiple de celui-ci, ledit nombre N correspondant au volume désiré X de concentrat de boisson, N étant égal à X/Y et au moins à six.

2. Appareil pour la mise en oeuvre du procédé selon la revendication 1 pour le dosage préci sd'une unité de consommation, ou d'un multiple de celle-ci, d'un concentrat de boisson, en particulier un concentrat d'une viscosité élevée et variable lorsqu'il est installé dans une machine de distribution ou de vente de boisson, ladite unité de consommation ayant un volume X et étant réglable incrémentalement par incréments de volume Y, comprenant, en coopération fonctionnelle:

un récipient jetable (1—3) se composant d'un réservoir (1) de concentrat de boisson, associé à un appendice (3) de dosage formé au moins partiellement d'une matière élastique et souple, ledit appendice étant pourvu d'un premier clapet de non-retour (9; 10; 105) s'ouvrant vers l'extérieur, et d'un second clapet de non-retour (7; 104, 106) s'ouvrant vers l'intérieur,

un dispositif d'application de force (14—19; 56—67; 94, 95) répondant à un signal de démarrage approprié pour exercer automatiquement une force pulsatoire sur la partie élastique de l'appendice de dosage (3), de façon à produire alternativement une réduction et un rétablissement du volume entre les deux clapets (7, 9, 10; 104, 105; 106, 109), pendant que ceux-ci continuent à être en communication ouverte l'un avec l'autre, ledit dispositif d'application de force étant intégré au corps (14; 51; 87) de ladite machine de distribution ou de vente et étant profilé de manière à s'adapter avec et à recevoir ledit appendice de dosage par une simple insertion sans démontage dudit dispositif d'application de force ou sans déformation dudit appendice de dosage, caractérisé par:

des moyens (17; 23; 24; 40, 41, 47; 80—84) pour détecter et compter le nombre d'opérations dudit dispositif d'application de force, et

des moyens (44, 45), réagissant à un signal d'arrêt approprié pour arrêter la distribution quand le compte est égal à un nombre désiré N, ou à un multiple de celui-ci, N étant à X/Y,

des moyens (47) pour produire ledit signal d'arrêt, l'agencement étant tel que, à chaque impulsion, un volume Y, dosé avec précision, du concentrat de boisson sorte de l'appendice par l'intermédiaire du premier clapet et qu'ensuite un volume égal pénètre dans ledit appendice en provenance du récipient et par l'intermédiaire du second clapet, le volume X étant au moins égal à six fois le volume Y.

3. Appareil tel que revendiqué dans la revendication 2 pour distribuer un concentrat de café et un concentrat de thé, adapté pour distribuer de 2 à 12 cm³ de concentrat par unité de consommation.

4. Appareil tel que revendiqué dans la revendication 3 pour distribuer du concentrat de café et du concentrat de thé, adapté pour produire de 5 à 50 impulsions par seconde.

5. Appareil tel que revendiqué dans une quelconque des revendications 2 à 4, pourvu de moyens à l'aide desquels le nombre d'impulsions produites est toujours un nombre entier.

6. Appareil tel que revendiqué dans une quelconque des revendications 2 à 5, caractérisé par des moyens (48—50) pour former trois groupes alternatifs de signaux, à savoir un moyen (50) dans lequel du concentrat est distribué pour une unité de consommation, un moyen (49) dans lequel du concentrat est distribué pour un nombre entier d'unités de consommation, et un moyen (48) dans lequel le volume de concentrat dosé peut être modifié à volonté.

7. Appariel tel que revendiqué dans la revendication 4, pour distribuer du concentrat de café et du concentrat de thé, adapté pour distribuer le concentrat dans une période de temps de 1 à 2 secondes.

8. Appareil tel que revendiqué dans une quelconque des revendications 2 à 7, comprenant des moyens (15, 16, 17, 20, 20', 21; 64, 72—76; 101, 102) pour modifier alternativement le volume de l'appendice de dosage (3) à chaque impulsion par application d'une force perpendiculaire au courant d'extrait.

9. Appareil tel que revendiqué dans une quelconque des revendications 2 à 8, comprenant des moyens pour produire la variation alternative de volume à chaque impulsion par application d'une force dans la direction du courant d'extrait.

10. Appareil tel que revendiqué dans une quelconque des revendications 2 à 9, comprenant des moyens (87—95) pour produire une interaction électromagnétique entre un système d'application de force électromagnétique (92), solidaire du corps (87) de la machine de distribution ou de vente, et un système magnétisable ou magnétique (93) solidaire de la partie élastique (94, 95) de l'appendice de dosage.

11. Appareil tel que revendiqué dans une quelconque des revendications 2 à 10, caractérisé en ce que la sensibilité du clapet (9, 10; 105, 109) de l'appendice de dosage s'ouvrant vers l'extérieur est comprise entre 400 et 500 millibars, de préférence entre 250 et 300 millibars, et la sensibilité du clapet (7; 104, 105) s'ouvrant vers l'intérieur est comprise entre 0,1 et 4,0 millibars, de préférence entre 2 et 4 millibars.

12. Appareil tel que revendiqué dans une quelconque des revendications 2 à 11, caractérisé en ce que l'appendice de dosage (3) est profilé en forme de tube.

13. Appareil tel que revendiqué dans une quelconque des revendications 2 à 12, dans lequel on utilise un récipient jetable (1—3) pour stocker et transporter un concentrat de boisson et pour distribuer les incréments du concentrat lorsqu'il est installé dans ladite machine de distribution, ledit récipient (1—3) comprenant un réservoir (1) de concentrat de boisson, un appendice de dosage (3) qui est au moins partiellement élastiquement flexible et qui est ainsi adapté pour être comprimé par un dispositif de compression à impulsions (14—19; 56—67; 94, 95) installé dans une machine de distribution de telle sorte qu'un nombre requis d'incréments de concentrat de boisson soient dosés à partir dudit récipient (2) et par l'intermédiaire de ladite sortie de dosage, ledit appendice de dosage comprenant en outre une extrémité (4) reliée en permanence audit réservoir, caractérisé en ce que ledit appendice de dosage (3) est en communication avec ledit réservoir (1) par l'intermédiaire d'un clapet anti-retour (7; 104, 106) ayant une sensibilité de 0,1—30 millibars et s'ouvrant vers ledit appendice de dosage, ledit appendice de dosage comportant une extrémité opposée de distribution qui est libre et qui est formée par un clapet anti-retour, s'ouvrant vers l'extérieur (9, 10; 105, 109), ayant une sensibilité de 40—500 millibars, et qui comporte une sortie de distribution normalement fermée.

14. Appareil selon la revendication 13, dans lequel la sensibilité du clapet anti-retour (7; 104, 106) s'ouvrant vers ledit appendice de dosage est comprise entre 0,5 et 4 millibars et la sensibilité du clapet anti-retour s'ouvrant vers l'extérieur (9, 10; 105, 109) est comprise entre 250 et 300 millibars.

15. Appareil selon une quelconque des revendications 13 et 14, dans lequel l'appendice de dosgae (3) a la forme d'un tube.

16. Appareil tel que revendiqué dans une quelconque des revendications 2 à 15, dans lequel on utilise un récipient (1) comportant un appendice de dosage (3) se composant d'un tube en matière élastomère (8) qui est approprié pour être utilisé dans le procédé selon la revendication 2 et comme une partie de l'appareil selon la revendication 7, caractérisé en ce que ledit tube a une épaisseur de paroi de ½ à 3 mm et une dureté Shore D de 20—80.

17. Appareil selon la revendication 16, dans lequel l'épaisseur de paroi est de 1 à 2 mm et la dureté Shore D est de 30—60.

18. Appareil selon une des revendications 16 ou 17, caractérisé en ce que le clapet anti-retour (7; 104, 106) s'ouvrant en direction de l'appendice (3) a une sensibilité de 0,1—30 millibars et le clapet anti-retour s'ouvrant vers l'extérieur (9, 10; 105, 109) a une sensibilité de 40—500 millibars.

19. Apareil selon la revendication 18, dans lequel le clapet anti-retour (7; 104, 106) s'ouvrant vers l'appendice de dosage (3) a une sensibilité de 0,5—4 millibars et le clapet anti-retour s'ouvrant vers l'extérieur (9, 10; 105, 109) a une sensibilité de 250—300 millibars.

20. Appareil selon une quelconque des revendications 2—12, caractérisé en ce que ledit moyen (47) de production dudit signal d'arrêt comprend des moyens (48—50) pour pré-régler manuellement et mémoriser ledit nombre N, ou un multiple de celui-ci, et des moyens pour comparer ledit nombre pré-réglé manuellement et le nombre d'applications de force afin de produire ledit signal d'arrêt approprié.

21. Appareil tel que revendiqué dans la revendication 20, dans lequel lesdits moyens de détection et de comptage comprennent un compteur d'impulsions (47).

22. Appareil tel que revendiqué dans la revendication 20, dans lequel ledit dispositif d'application de force comprend un élément rotatif (17; 80) et lesdits moyens de détection et de comptage (23, 24, 47; 81, 82, 83) servant à détecter les rotations dudit élément pour produire un train d'impulsions comprennent un moyen (47) de comptage desdites impulsions.

23. Appareil tel que revendiqué dans la revendication 22, dans lequel lesdits moyens de réglage comprennent un moyen de commutation (48) pour établir l'un quelconque d'une pluralité de nombres.

24. Appareil tel que revendiqué dans la revendication 2, comprenant des moyens (47) pour produire lesdits signaux appropriés de démarrage et d'arrêt.

FIG.1

FIG. 2

FIG.3

FIG.4

EP 0 067 466 B1

FIG.7

FIG.5

4

FIG. 6